# EUROPEAN PATENT SPECIFICATION

(11) **EP 1 952 613 B1**
(45) Date of publication and mention of the grant of the patent: **18.04.2018**
(21) Application number: 06820973.3
(22) Date of filing: 13.11.2006
(51) Int. Cl.: H04L 29/08, H04W 4/18

(54) **INTERMEDIARY, SOURCE AND METHODS FOR SHARING CONTENT**
VERMITTLER, QUELLE UND VERFAHREN ZUM GEMEINSAMEN BENUTZEN VON INHALT
INTERMEDIAIRE, SOURCE ET PROCEDES POUR PARTAGER DU CONTENU

(30) Priority: 17.11.2005 US 281278
(43) Date of publication of application: 06.08.2008
(73) Proprietor: Nokia Technologies Oy, 02610 Espoo (FI)
(72) Inventor: BELIMPASAKIS, Petros, FIN-33200 Tampere (FI)
(74) Representative: Higgin, Paul
(86) International application number: PCT/IB2006/003353
(87) International publication number: WO 2007/057777

(56) References cited:
- US-A1- 2002 147 774
- US-A1- 2004 049 579
- US-A1- 2004 107 143
- US-A1- 2005 064 852
- US-A1- 2005 209 927
- US-A1- 2006 218 304
- JENQ-SHIOU LEU ET AL: "BRAINS: Blog Rendering and Accessing INstantly System", WIRELESS AND MOBILE COMPUTING, NETWORKING AND COMMUNICATIONS, 2005. (W IMOB'2005), IEEE INTERNATIONAL CONFERENCE ON MONTREAL, CANADA AUG. 22-24, 2005, PISCATAWAY, NJ, USA,IEEE, vol. 4, 22 August 2005 (2005-08-22), pages 1-4, XP010839723, DOI: 10.1109/WIMOB.2005.1512942 ISBN: 978-0-7803-9181-9
- LEU J.-S. ET AL.: 'BRAINS: blog rendering and accessing instantly system' WIRELESS AND MOBILE COMPUTING, NETWORKING AND COMMUNICATIONS, 2005. (WIMOB'2005 IEEE INTERNATIONAL CONFERENCE), MONTREAL, CANADA, [Online] vol. 4, 22 August 2005 - 24 August 2005, pages 1 - 4, XP010839723 Retrieved from the Internet: <URL:http://www.ieeexplore.ieee.org/ie15/10 102/32401/01512942.pdf?tp=&isnumber=&arnumb er=151294>
- BELIMPASAKIS P. ET AL.: 'A Resource-efficient Mobile Blogging System' PROCEEDINGS OF THE 6TH IEEE INTERNATIONAL WORKSHOP ON APPLICATIONS AND SERVICES IN WIRELESS NETWORKS (ASWN '06), BERLIN, GERMANY, [Online] 30 May 2005, XP003011317 Retrieved from the Internet: <URL:http://www.aswn2006.org/download/prese ntations/Berlimpasakis_A_Resource-efficient _Mobile_Blogging_System_ASWN2006.pdf>

## Description

### FIELD OF THE INVENTION

The present invention generally relates to systems and methods of sharing content and, more particularly, relates to systems and methods for sharing content of a mobile terminal with reduced resource requirements.

### BACKGROUND OF THE INVENTION

Where mobile terminals and other wireless devices were perhaps viewed by many as a luxury when first introduced into the marketplace, they are today viewed by our society as very important, convenient, and useful tools. A great number of people now carry their mobile devices with them wherever they go. This popularity of wireless communication has spawned a multitude of new wireless systems, devices, protocols, etc. Consumer demand for advanced wireless functions and capabilities has also fueled a wide range of technological advances in the utility and capabilities of wireless devices. Wireless/mobile devices not only allow voice communication, but also facilitate messaging, multimedia communications, e-mail, Internet browsing, blogging, and access to a wide range of wireless applications and services.

A blog (also known as a web log or weblog) can be defined as a frequent, chronological publication of personal thoughts and Web links. A blog is often a mixture of what is occurring in a person's life and what is occurring on the Web. It is a living journal, an online chronicle of personal, creative and organizational life. It functions as a type of hybrid diary/guide site and can therefore be just as unique as its individual creator, i.e., blogger. In this regard, bloggers often have a strong desire to express themselves in many different ways on the Web, and wireless devices provide a new method to publish and update blogs easily. One of the features that contribute to the popularity of blogs is that they are easily updatable, i.e., new information can be published frequently, which makes blogs "alive."

Modem wireless devices, such as cellular telephones, generate, collect and maintain a considerable amount of content that may be published to a blog. This content can include, for example, call logs (e.g., when and to where a call was made, how long the call lasted, the occurrence of incoming and missed calls, etc.), records of text messages that are sent and received, calendar-related information, images taken with an integral camera or otherwise received, or the like.

Thus, while access to this plethora of information is exciting, storing the desired information and utilizing the various access techniques for transferring, or more particularly uploading, the desired information can become burdensome to the casual mobile device user or blogger. In this regard, the increase in the quantity of information that is and will be accessible to and/or stored by mobile devices can place heavy resource and/or cost burdens on such mobile devices and their users. To relieve at least a portion of these burdens, techniques have been developed whereby mobile users and bloggers are capable of transferring, or uploading, content from their mobile devices to servers or the like with increased storage capacity and accessibility to those who frequent the respective user's blog As will be appreciated, however, such techniques can also have drawbacks.

Whereas conventional techniques for uploading content are adequate, such techniques have a drawback in that they are limited in the amount of available control over the uploading of content. According to conventional uploading, techniques, control over the uploading of content is typically limited. In this regard, conventional uploading techniques typically allow only very limited control over the time and manner of uploading content. For example, conventional techniques typically do not permit terminal users to tailor content uploading, according to anticipated requests from other users for such content. It would therefore be advantageous to have even more robust forms of upload control, especially for content that may take a while to upload and which senders and/or recipients might therefore want to be careful about transmitting and/or receiving, respectively, if the only available channel is an expensive channel.

US 2004/0107143 discloses methods for authorising content download as well as a respective network system. The method allows a user agent (UA) to download content from its associated proxy without being charged for the necessary radio interface time. The method comprises the steps of receiving a message with a uniform resource identifier (URI) associated to a resource on a storage server (100); requesting said resource based on said uniform resource identifier URI from said storage server (100) via a resource proxy server (110), forwarding the content associated to said resource proxy server (110); authorising a download of said forwarded content from said resource proxy server (110) to a second user agent (UA2), performing an authorised download of said content; and subtracting the costs related to said authorised download of said content from overall costs.

US 2005/0209927 discloses systems and methods for uploading content and, more particularly, to systems and associated terminals, methods and computer program products for uploading, content from terminals. A sender 102 establishes communication with a recipient 104, such as directly or via a proxy to upload content 114 to the recipient. The recipient comprises an upload agent 110. The upload agent 110 can receive an upload descriptor, and thereafter store the upload descriptor in an incomplete download storage 116. The upload descriptor can include any of a number of different pieces of information to facilitate the sender in uploading content, but in one embodiment, the upload descriptor includes attributes such as the size of the upload content and a uniform resource identifier (URI). US2002/147774 describes a content delivery network (CDN). A content provider uploads content to a storage site. A storage URL is created when the content provider publishes the content to the storage system. Requests for the content can go to edge servers. The following is an example of how a URL might look for use in the invention: a9.g.cdnsp.net/cust.download.cdnsp.com/dirA/foo.asf, where a9.g.cdnsp net is the URL prepend that directs the CDN request routing mechanism to a preferred edge server, and cust.download.cdnsp.com/dirA/foo.asf is the storage URL. In the event of a cache hit, the edge server simply returns the content to the browser. The edge servers are directed to go to the storage site for the content on a cache miss.

### SUMMARY OF THE INVENTION

In light of the foregoing background, exemplary embodiments of the present invention provide an improved intermediary apparatus, a system, a computer program, and methods for sharing content. In accordance with exemplary embodiments of the present invention, a source (e.g., mobile terminal) is capable of uploading content to an intermediary (e.g., computing system, origin server, etc.) for providing the uploaded content to one or more destinations (e.g., terminals, computing systems, origin servers, etc.). In this regard, the source uploading content to the intermediary can include the source uploading, to the intermediary, a source reference to the content stored by the source such that the intermediary can associate the source reference identifying the content stored by the source with an intermediary reference identifying, at the intermediary, the content, in response to receiving the source reference from the source, and immediately indicate the availability of the content via the intermediary reference to one or more destinations without first receiving the content. In response to the intermediary receiving a first request identifying the content, provided the intermediary hasn't in the interim received the content from the source, the intermediary can recognize that the intermediary reference from the first request is associated with the source reference, request and receive the content from the source based upon the reference to the content. The intermediary can then provide the requested content, and can store a copy of the requested content such that future requests for the content can be fulfilled from local content storage of the intermediary.

As the wireless channel by which the content is uploaded to the intermediary 74 may place undesirable resource and/or cost burdens on the terminal, first providing the reference to content in lieu of the content may permit the terminal to delay (if not reduce or otherwise eliminate) that burden until such time as a destination actually requests the content. Thus, if a destination does not request the content, the terminal may avoid the resource and/or cost burden of uploading the content to the intermediary to make the content available for downloading to a destination. Further, if in the interim of indicating the availability of the content but before receiving a request for the content, a less burdensome manner of uploading the content becomes available, the terminal can upload the content to the intermediary in the less burdensome manner. Upon receiving a request for the content, then, the intermediary can provide the uploaded content to the destination, thereby permitting the terminal to share the content without uploading the content across the more burdensome network.

And as indicated above and explained in greater detail below, the intermediary, source and method of exemplary embodiments of the present invention may solve the problems identified by prior techniques and may provide additional advantages.

The invention is as set out in the independent claims.

### BRIEF DESCRIPTION OF THE DRAWINGS

Having thus described the invention in general terms, reference will now be made to the accompanying drawings, which are not necessarily drawn to scale, and wherein:
FIG. 1 is a block diagram of one type of terminal and system that would benefit from embodiments of the present invention;
FIG. 2 is a schematic block diagram of an entity capable of operating as a terminal, computing system and/or origin server, in accordance with exemplary embodiments of the present invention;
FIG. 3 is a schematic block diagram of a terminal comprising a mobile station, in accordance with one exemplary embodiment of the present invention;
FIG. 4 is a functional block diagram of a source of content sharing that content, in accordance with one exemplary embodiment of the present invention; and
FIGS. 5 and 6 are flowcharts illustrating various steps in methods of sharing content, in accordance with exemplary embodiments of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

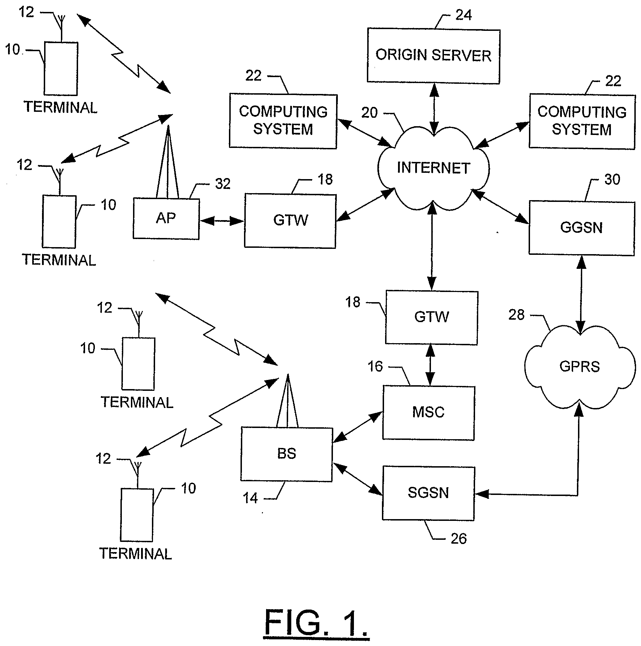

Referring to FIG. 1, an illustration of one type of terminal and system that would benefit from the present invention is provided. The system, method and computer program product of embodiments of the present invention will be primarily described in conjunction with mobile communications applications. It should be understood, however, that the system, method and computer program product of embodiments of the present invention can be utilized in conjunction with a variety of other applications, both in the mobile communications industries and outside of the mobile communications industries. For example, the system, method and computer program product of embodiments of the present invention can be utilized in conjunction with wireline and/or wireless network (e.g., Internet) applications.

As shown, one or more terminals **10** may each include an antenna **12** for transmitting signals to and for receiving signals from a base site or base station (BS) **14.** The base station is a part of one or more cellular or mobile networks each of which includes elements required to operate the network, such as a mobile switching center (MSC) **16.** As well known to those skilled in the art, the mobile network may also be referred to as a Base Station/MSC/Interworking function (BMI). In operation, the MSC is capable of routing calls to and from the terminal when the terminal is making and receiving calls. The MSC can also provide a connection to landline trunks when the terminal is involved in a call. In addition, the MSC can be capable of controlling the forwarding of messages to and from the terminal, and can also control the forwarding of messages for the terminal to and from a messaging center.

The MSC **16** can be coupled to a data network, such as a local area network (LAN), a metropolitan area network (MAN), and/or a wide area network (WAN). The MSC can be directly coupled to the data network. In one typical embodiment, however, the MSC is coupled to a GTW **18,** and the GTW is coupled to a WAN, such as the Internet **20.** In turn, devices such as processing elements (e.g., personal computers, server computers or the like) can be coupled to the terminal **10** via the Internet. For example, as explained below, the processing elements can include one or more processing elements associated with a computing system **22** (two shown in FIG. 1), origin server **24** (one shown in FIG. 1) or the like, as described below.

The BS **14** can also be coupled to a signaling GPRS (General Packet Radio Service) support node (SGSN) **26.** As known to those skilled in the art, the SGSN is typically capable of performing functions similar to the MSC **16** for packet switched services. The SGSN, like the MSC, can be coupled to a data network, such as the Internet **20.** The SGSN can be directly coupled to the data network. In a more typical embodiment, however, the SGSN is coupled to a packet-switched core network, such as a GPRS core network **28.** The packet-switched core network is then coupled to another GTW, such as a GTW GPRS support node (GGSN) **30,** and the GGSN is coupled to the Internet. In addition to the GGSN, the packet-switched core network can also be coupled to a GTW **18.** Also, the GGSN can be coupled to a messaging center. In this regard, the GGSN and the SGSN, like the MSC, can be capable of controlling the forwarding of messages, such as MMS messages. The GGSN and SGSN can also be capable of controlling the forwarding of messages for the terminal to and from the messaging center.

In addition, by coupling the SGSN **26** to the GPRS core network **28** and the GGSN **30,** devices such as a computing system **22** and/or origin server **24** can be coupled to the terminal **10** via the Internet **20,** SGSN and GGSN. In this regard, devices such as a computing system and/or origin server can communicate with the terminal across the SGSN, GPRS and GGSN. By directly or indirectly connecting the terminals and the other devices (e.g., computing system, origin server, etc.) to the Internet, the terminals can communicate with the other devices and with one another, such as according to the Hypertext Transfer Protocol (HTTP), to thereby carry out various functions of the terminal.

Although not every element of every possible mobile network is shown and described herein, it should be appreciated that the terminal **10** can be coupled to one or more of any of a number of different networks through the BS **14.** In this regard, the network(s) can be capable of supporting communication in accordance with any one or more of a number of first-generation (1G), second-generation (2G), 2.5G and/or third-generation (3G) mobile communication protocols or the like. For example, one or more of the network(s) can be capable of supporting communication in accordance with 2G wireless communication protocols IS-136 (TDMA), GSM, and IS-95 (CDMA). Also, for example, one or more of the network(s) can be capable of supporting communication in accordance with 2.5G wireless communication protocols GPRS, Enhanced Data GSM Environment (EDGE), or the like. Further, for example, one or more of the network(s) can be capable of supporting communication in accordance with 3G wireless communication protocols such as Universal Mobile Telephone System (UMTS) network employing Wideband Code Division Multiple Access (WCDMA) radio access technology. Some narrow-band AMPS (NAMPS), as well as TACS, network(s) may also benefit from embodiments of the present invention, as should dual or higher mode mobile stations (e.g., digital/analog or TDMA/CDMA/analog phones).

The terminal **10** can further be coupled to one or more wireless access points (APs) **32.** The APs can comprise access points configured to communicate with the terminal in accordance with techniques such as, for example, radio frequency (RF), Bluetooth (BT), infrared (IrDA) or any of a number of different wireless networking techniques, including wireless LAN (WLAN) techniques such as IEEE 802.11 (e.g., 802.11a, 802.11b, 802.11g, 802.11n, etc.), WiMAX techniques such as IEEE 802.16, and/or ultra wideband (UWB) techniques such as IEEE 802.15 or the like. The APs may be coupled to the Internet **20.** Like with the MSC **16,** the APs can be directly coupled to the Internet. In one embodiment, however, the APs are indirectly coupled to the Internet via a GTW **18.** As will be appreciated, by directly or indirectly connecting the terminals and the computing system **22,** origin server **24,** and/or any of a number of other devices, to the Internet, the terminals can communicate with one another, the computing system, etc., to thereby carry out various functions of the terminal, such as to transmit data, content or the like to, and/or receive content, data or the like from, the computing system. As used herein, the terms "data," "content," "information" and similar terms may be used interchangeably to refer to data capable of being transmitted, received and/or stored in accordance with embodiments of the present invention. Thus, use of any such terms should not be taken to limit the spirit and scope of the present invention.

Although not shown in FIG. 1, in addition to or in lieu of coupling the terminal **10** to computing systems **22** across the Internet **20,** the terminal and computing system can be coupled to one another and communicate in accordance with, for example, RF, BT, IrDA or any of a number of different wireline or wireless communication techniques, including LAN, WLAN, WiMAX and/or UWB techniques. One or more of the computing systems can additionally, or alternatively, include a removable memory capable of storing content, which can thereafter be transferred to the terminal. Further, the terminal **10** can be coupled to one or more electronic devices, such as printers, digital projectors and/or other multimedia capturing, producing and/or storing devices (e.g., other terminals). Like with the computing systems **22,** the terminal can be configured to communicate with the portable electronic devices in accordance with techniques such as, for example, RF, BT, IrDA or any of a number of different wireline or wireless communication techniques, including USB, LAN, WLAN, WiMAX and/or UWB techniques.

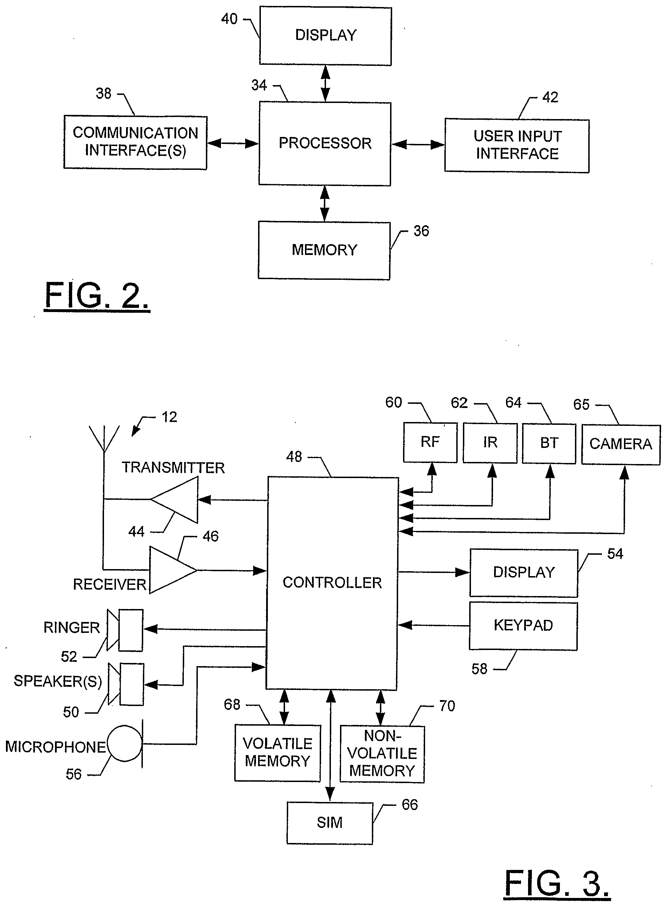

Referring now to FIG. 2, a block diagram of an entity capable of operating as a terminal **10,** computing system **22** and/or origin server **24,** is shown in accordance with one embodiment of the present invention. Although shown as separate entities, in some embodiments, one or more entities may support one or more of a terminal, origin server and/or computing system, logically separated but co-located within the entit(ies). For example, a single entity may support a logically separate, but co-located, computing system and origin server. Also, for example, a single entity may support a logically separate, but co-located terminal and computing system. Further, for example, a single entity may support a logically separate, but co-located terminal and origin server.

The entity capable of operating as a terminal **10,** computing system **22** and/or origin server **24** includes various means for performing one or more functions in accordance with exemplary embodiments of the present invention, including those more particularly shown and described herein. It should be understood, however, that one or more of the entities may include alternative means for performing one or more like functions, without departing from the spirit and scope of the present invention. More particularly, for example, as shown in FIG. 2, the entity can include a processor **34** connected to a memory **36.** The memory can comprise volatile and/or non-volatile memory, and typically stores content, data or the like. For example, the memory typically stores content transmitted from, and/or received by, the entity. Also for example, the memory typically stores client applications, instructions or the like for the processor to perform steps associated with operation of the entity in accordance with embodiments of the present invention. As explained below, for example, the memory can store client application(s).

As described herein, the client application(s) may each comprise software operated by the respective entities. It should be understood, however, that any one or more of the client applications described herein can alternatively comprise firmware or hardware, without departing from the spirit and scope of the present invention. Generally, then, the terminal **10,** computing system **22** and/or origin server **24** can include one or more logic elements for performing various functions of one or more client application(s). As will be appreciated, the logic elements can be embodied in any of a number of different manners. In this regard, the logic elements performing the functions of one or more client applications can be embodied in an integrated circuit assembly including one or more integrated circuits integral or otherwise in communication with a respective network entity (i.e., terminal, computing system, origin server, etc.) or more particularly, for example, a processor **34** of the respective network entity. The design of integrated circuits is by and large a highly automated process. In this regard, complex and powerful software tools are available for converting a logic level design into a semiconductor circuit design ready to be etched and formed on a semiconductor substrate. These software tools automatically route conductors and locate components on a semiconductor chip using well established rules of design as well as huge libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the memory **36,** the processor **34** can also be connected to at least one interface or other means for displaying, transmitting and/or receiving data, content or the like. In this regard, the interface(s) can include at least one communication interface **38** or other means for transmitting and/or receiving data, content or the like. For example, the communication interface(s) can include a first communication interface for connecting to a first network, and a second communication interface for connecting to a second network. In addition to the communication interface(s), the interface(s) can also include at least one user interface that can include one or more earphones and/or speakers, a display **40,** and/or a user input interface **42.** The user input interface, in turn, can comprise any of a number of devices allowing the entity to receive data from a user, such as a microphone, a keypad, a touch display, a joystick, image capture device (e.g., digital camera) or other input device.

Reference is now made to FIG. 3, which illustrates one type of terminal **10** that would benefit from embodiments of the present invention. It should be understood, however, that the terminal illustrated and hereinafter described is merely illustrative of one type of terminal that would benefit from the present invention and, therefore, should not be taken to limit the scope of the present invention. While several embodiments of the terminal are illustrated and will be hereinafter described for purposes of example, other types of terminals, such as portable digital assistants (PDAs), pagers, laptop computers and other types of electronic systems, can readily employ the present invention.

The terminal **10** includes various means for performing one or more functions in accordance with exemplary embodiments of the present invention, including those more particularly shown and described herein. It should be understood, however, that the terminal may include alternative means for performing one or more like functions, without departing from the spirit and scope of the present invention. More particularly, for example, as shown in FIG. 3, in addition to an antenna **12,** the terminal **10** includes a transmitter **44,** a receiver **46,** and a controller **48** that provides signals to and receives signals from the transmitter and receiver, respectively. These signals include signaling information in accordance with the air interface standard of the applicable cellular system, and also user speech and/or user generated data. In this regard, the terminal can be capable of operating with one or more air interface standards, communication protocols, modulation types, and access types. More particularly, the terminal can be capable of operating in accordance with any of a number of first generation (1G), second generation (2G), 2.5G and/or third-generation (3G) communication protocols or the like. For example, the terminal may be capable of operating in accordance with 2G wireless communication protocols IS-136 (TDMA), GSM, and IS-95 (CDMA). Also, for example, the terminal may be capable of operating in accordance with 2.5G wireless communication protocols GPRS, Enhanced Data GSM Environment (EDGE), or the like. Further, for example, the terminal may be capable of operating in accordance with 3G wireless communication protocols such as Universal Mobile Telephone System (UMTS) network employing Wideband Code Division Multiple Access (WCDMA) radio access technology. Some narrow-band AMPS (NAMPS), as well as TACS, mobile terminals may also benefit from the teaching of this invention, as should dual or higher mode phones (e.g., digital/analog or TDMA/CDMA/analog phones).

It is understood that the controller **48** includes the circuitry required for implementing the audio and logic functions of the terminal **10.** For example, the controller may be comprised of a digital signal processor device, a microprocessor device, and various analog-to-digital converters, digital-to-analog converters, and other support circuits. The control and signal processing functions of the terminal are allocated between these devices according to their respective capabilities. The controller can additionally include an internal voice coder (VC), and may include an internal data modem (DM). Further, the controller may include the functionality to operate one or more software programs, which may be stored in memory (described below). For example, the controller may be capable of operating a connectivity program, such as a conventional Web browser. The connectivity program may then allow the terminal to transmit and receive Web content, such as according to HTTP and/or the Wireless Application Protocol (WAP), for example.

The terminal **10** also comprises a user interface including one or more earphones and/or speakers **50,** a ringer **52,** a display **54,** and a user input interface, all of which are coupled to the controller **48.** The user input interface, which allows the terminal to receive data, can comprise any of a number of devices allowing the terminal to receive data, such as a microphone **56,** a keypad **58,** a touch display and/or other input device. In embodiments including a keypad, the keypad includes the conventional numeric (0-9) and related keys (#, *), and other keys used for operating the terminal. Although not shown, the terminal can include a battery, such as a vibrating battery pack, for powering the various circuits that are required to operate the terminal, as well as optionally providing mechanical vibration as a detectable output.

The terminal **10** can also include one or more means for sharing and/or obtaining data. For example, the terminal can include a short-range radio frequency (RF) transceiver or interrogator **60** so that data can be shared with and/or obtained from electronic devices in accordance with RF techniques. The terminal can additionally, or alternatively, include other short-range transceivers, such as, for example an infrared (IR) transceiver **62,** and/or a Bluetooth (BT) transceiver **64** operating using Bluetooth brand wireless technology developed by the Bluetooth Special Interest Group. The terminal can therefore additionally or alternatively be capable of transmitting data to and/or receiving data from electronic devices in accordance with such techniques. In addition, the terminal can include an image capture element **65,** such as a digital camera, charge coupled device (CCD), optical scanner or the like, such that the terminal can obtain image data in accordance with any of a number of different electronic imaging techniques. Although not shown, the terminal can additionally or alternatively be capable of transmitting and/or receiving data from electronic devices according to a number of different wireless networking techniques, including WLAN, WiMAX, UWB techniques or the like.

The terminal **10** can further include memory, such as a subscriber identity module (SIM) **66,** a removable user identity module (R-UIM) or the like, which typically stores information elements related to a mobile subscriber. In addition to the SIM, the terminal can include other removable and/or fixed memory. In this regard, the terminal can include volatile memory **68,** such as volatile Random Access Memory (RAM) including a cache area for the temporary storage of data. The terminal can also include other non-volatile memory **70,** which can be embedded and/or may be removable. The non-volatile memory can additionally or alternatively comprise an EEPROM, flash memory or the like. The memories can store any of a number of pieces of information, and data, used by the terminal to implement the functions of the terminal. For example, the memories can store an identifier, such as an international mobile equipment identification (IMEI) code, international mobile subscriber identification (IMSI) code, mobile station integrated services digital network (MSISDN) code (mobile telephone number), Session Initiation Protocol (SIP) address or the like, capable of uniquely identifying the mobile station, such as to the MSC **16.** In addition, the memories can store one or more client applications capable of operating on the terminal.

As explained in the background section, to relieve at least a portion of the resource and/or cost burdens on terminals, terminals are typically capable of transferring, or uploading, content to an intermediary, such as an origin server **24,** that may have storage capacity and accessibility to those who may desire to receive, and consume (if so desired), such content. Conventional techniques, however, typically do not allow much control over the time and/or manner of uploading content. Exemplary embodiments of the present invention are therefore capable of controlling the time and/or manner of uploading content from a terminal to an origin server to thereby make that content available for downloading from the origin server to one or more destinations.

In accordance with exemplary embodiments of the present invention, a source **72,** such as a terminal **10,** is capable of uploading content to an intermediary **74,** such as a computing system **22,** origin server **24** or the like, for providing the uploaded content to one or more destinations **76,** such as one or more terminals, computing systems and/or origin servers. In this regard, the intermediary can comprise, for example, a network entity in the possession of or otherwise under the control of the source user, a network entity of a third party providing a service to the source user, or the like. Uploading content can include the source **72** uploading, to the intermediary **74,** a reference to the content stored by the source. The intermediary can then immediately indicate the availability of the content to one or more destinations **76,** which can then request the content from the intermediary. In response to a first request for the content, the intermediary can request and thereafter receive the content from the source based upon the reference to the content, provided the content has not been uploaded to the intermediary between indicating the availability of the content and receiving the request for the content. The intermediary can then provide the requested content to the destination. In addition, the intermediary can store a copy of the requested content such that, in response to additional requests for the content, the intermediary can provide the stored copy in lieu of repeatedly requesting/receiving the content from the source.

In instances where the source **72** comprises a terminal **10,** by providing the intermediary with a reference to content stored by the terminal, the terminal can make the content immediately available for downloading by one or more destinations **76.** As the wireless channel by which the content is uploaded to the intermediary **74** may place undesirable resource and/or cost burdens on the terminal, the terminal may delay (if not reduce or otherwise eliminate) that burden until such time as a destination actually requests the content. Thus, if a destination does not request the content, the terminal may avoid the resource and/or cost burden of uploading the content to the intermediary to make the content available for downloading to a destination. Further, if in the interim of indicating the availability of the content but before receiving a request for the content, a less burdensome manner of uploading the content becomes available, the terminal can upload the content to the intermediary in the less burdensome manner. For example, if in the interim of indicating the availability of the content the terminal moves from a GPRS network to a less-costly network, such as a WLAN, universal serial bus (USB) personal area network (PAN), Bluetooth PAN or the like, the terminal can upload the content to the intermediary across the WLAN/USB/Bluetooth network. Upon receiving a request for the content, then, the intermediary can provide the uploaded content to the destination, thereby permitting the terminal to share the content without uploading the content across the GPRS network.

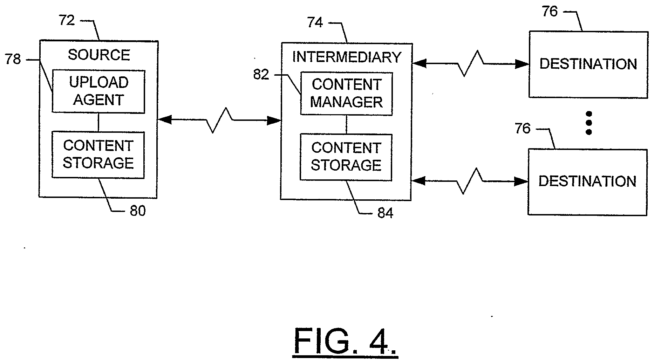

Reference is now drawn to FIG. 4, which illustrates a functional block diagram of a source **72** (e.g., terminal **10**) uploading a reference to content, and/or the content itself, to an intermediary **74** (e.g., computing system **22,** origin server **24,** etc.). As shown, the source is capable of operating an application, such as an upload agent **78,** which is capable of uploading, to the intermediary, a reference to one or more piece(s) of content stored in a content storage **80** in memory (e.g., non-volatile memory **70**) of the source. Additionally, at some point subsequent to uploading the reference to content, the upload agent is capable of uploading the content itself to the intermediary. The intermediary, in turn, is capable of operating a content manager **82,** which is capable of receiving the reference to content and thereafter, such as immediately thereafter, indicating the availability of the content to one or more destinations **76.** Then, at some point after indicating the availability of the content, the terminal can upload the content to the intermediary such that the content can be downloaded from the intermediary to the destination(s). For example, in response to receiving a first request for the content, the content manager can request and thereafter receive the content from the source based upon the reference to the content. Alternatively, for example, the terminal can move from a first network to a second, less burdensome (e.g., less resource and/or cost burdensome) network such that the terminal can upload the content to the intermediary across the less burdensome network.

Irrespective of exactly when the content manager **82** of the intermediary **74** receives the content from the upload agent **78** of the source **72,** the content manager can store a copy of the requested content in a content storage **84** in memory of the intermediary. Additionally, the content manager can provide the content to one or more destinations, such as in response to requests for the content from those destinations. The destinations can then respond to receipt of the content in any of a number of different manners, such as by storing and/or consuming the content.

As shown and described herein, the upload agent **78** and content manager **82** comprise software operated by the source **72** and intermediary **74,** respectively. It should be understood, however, that the upload agent and/or content manager can alternatively comprise firmware or hardware, without departing from the spirit and scope of the present invention. Also, although the upload agent is shown and described as being local to the source, the upload agent can alternatively be distributed from, and in communication with, the source, such as by implementing the upload agent in a mobile web server in communication with the source across the Internet **20.** Likewise, the content manager can be located local to or distributed from the intermediary. Further, as shown and described herein, content may be uploaded, downloaded, exchanged or otherwise transferred from one entity to another entity. It should be understood, however, that the terms "uploading," "downloading," "providing," "exchanging" and "transferring" can be used herein interchangeably, and that uploading, downloading, providing, exchanging or transferring content can include, for example, moving or copying content, without departing from the spirit and scope of the present invention.

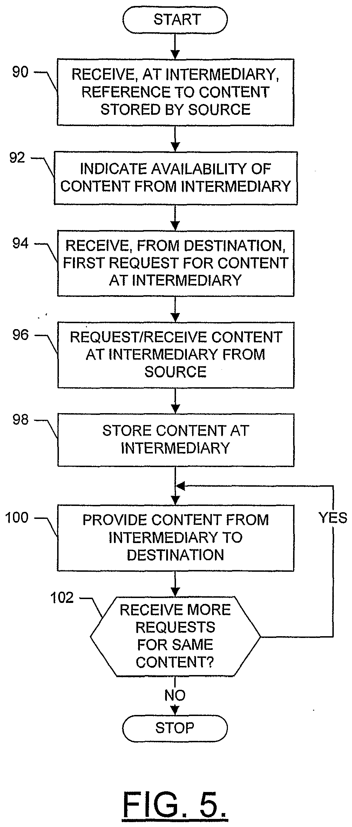

Reference is now drawn to FIG. 5, which illustrates a flowchart including various steps in a method of sharing content of a source **72** (e.g., terminal **10**), in accordance with exemplary embodiments of the present invention. For purposes of illustration and without loss of generality, exemplary embodiments of the present invention may be described with reference to a terminal source capable of communicating across a GPRS network (i.e., first network). It should be understood, however, that the source may be equally capable of communicating across any of a number of other networks without departing from the spirit and scope of the present invention. Similarly, exemplary embodiments of the present invention may be described with reference to one or more destinations (e.g., terminal, computing system, origin server, etc.) capable of communicating across the Internet **20.** It should be understood, however, that the destination(s) may be equally capable of communicating across any of a number of other networks without departing from the spirit and scope of the present invention.

Now, as shown in block **90** of FIG. 5, a method according to one exemplary embodiment of the present invention includes an intermediary **74,** or more particularly a content manager **82** of an intermediary, receiving a reference to content stored by a source **72,** the reference being received from an upload agent **78** of the source. For example, the intermediary can receive a reference comprising an address, such as a uniform resource identifier (URI), identifying the content in content storage **80** of the source. In addition to receiving the reference, the intermediary can receive any of a number of different pieces of information related to the content, such as a notification to share the content, and/or a summary or shortened form of the content. The reference can be received by the intermediary in any of a number of different manners. For example, presume that a source acquires or is otherwise provided with content, such as an image, that the source user desires to share. In this regard, the source user may manually direct the source to share the content, or the source may be configured to automatically share the content. In either instance of the source being triggered to share the content, the source can thereafter form a reference to the content stored in the content storage, and send the reference to the intermediary along with a notification to share the content and a thumbnail of the content (particularly when the content comprises an image). Thus, in instances in which the network across which the source communicates can place undesirable resource and/or cost burdens on the terminal sending the content itself, such as in the case of a number of GPRS networks, sending the reference may reduce those burdens as the resource and other related information may be smaller than, and thus require less time to send, the content itself.

Irrespective of exactly how the content manager **82** receives the reference to content stored by the source **72,** the intermediary can thereafter indicate the availability of the content from the intermediary, as shown in block **92.** In this regard, upon receiving the reference to the content stored in content storage **80** of the source, the content manager can associate the reference (e.g., URI) identifying the content stored by the source (i.e., source reference), with a reference (e.g., URI) identifying the content at the intermediary (i.e., intermediary reference). The intermediary can then indicate the availability of the content from the intermediary via the intermediary reference, although at this point the content can be maintained in content storage of the source. The intermediary can indicate the availability of content in any of a number of different manners. For example, the intermediary can send, to one or more destinations **76,** the intermediary reference to the content along with a notification of the availability of the content and, if so desired, one or more of the pieces of information related to the content (e.g., thumbnail of the content). Additionally or alternatively, or example, the intermediary can make the intermediary reference available (alone or along with the notification and/or other related pieces of information) for retrieval by one or more destinations, such as via a blog of the source user hosted by the intermediary. The intermediary may therefore immediately indicate the availability of content before receiving the content from the source, or more particularly the upload agent **78** of the source.

After the content manager **82** of the intermediary **74** indicates the availability of the content at the intermediary, but stored in content storage **80** of the source **72,** the content manager can receive a first request (e.g., HTTP GET request) for the content from a destination **76,** as shown in block **94.** In this regard, although the content manager may receive the request in any of a number of different manners, the intermediary of one exemplary embodiment can receive a request identifying the content by the intermediary reference. In response to the destination request for the content, and recognizing that the intermediary reference for the content is associated with a source reference, or that the content is otherwise not in content storage **84** of the intermediary, the content manager can request the content from the source, or more particularly the upload agent **78** of the source. In this regard, the content manager can send a request to the upload agent identifying the content by the source reference. In response to receiving the intermediary request, the upload agent can identify the content in content storage via the source reference, and send the content to the content manager. In turn, the content manager can store a copy of the requested content in content storage **84** of the intermediary, as shown in block **98.** The content manager can store a copy of the content in a number of different manners including, for example, such that the intermediate reference identifies the content in content storage of the intermediary. Before, after or as the content manager stores a copy of the requested content, the content manager can send the content to the destination that requested the respective content, as shown in block **100.**

By storing a copy of the requested content in content storage **84** of the intermediary **74,** the content manager **82** can thereafter fulfill subsequent requests for the same content from the local content storage without repeatedly requesting the content from the upload agent **78** of the source **72.** Thus, after locally storing a copy of the requested content, the content manager may receive one or more subsequent requests for the same content, as shown in block **102.** Similar to the first request, the content manager may receive subsequent requests identifying the content by the intermediary reference. In response to the subsequent requests, and now recognizing that the intermediary reference identifies content in content storage **84** of the intermediary, the content manager can identify the content in content storage via the intermediary reference, and send the content to the destinations that requested the respective content, as again shown in block **100.** Again in instances in which the network across which the source communicates can place undesirable resource and/or cost burdens on the terminal sending the content itself (e.g., GPRS networks), then, fulfilling requests from content stored locally at the intermediary may eliminate those burdens for subsequent requests for the content as the intermediary may be capable of sending the content independent of the respective network.

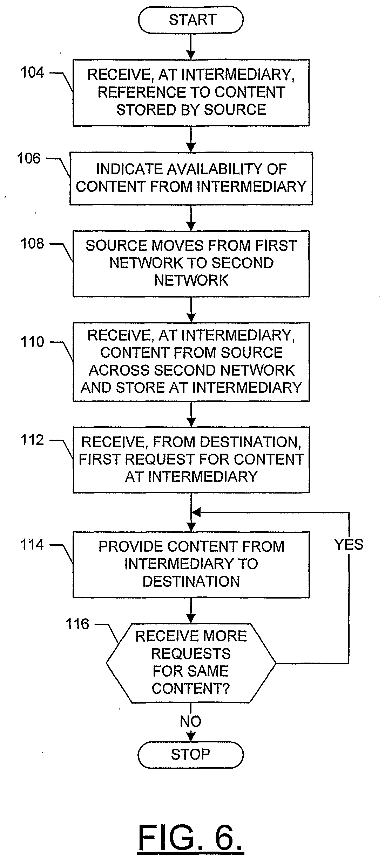

As indicated above, in various instances before the content manager **82** of the intermediary **74** receives a request for content indicated to be available from the intermediary, the source **72** may move from a first network (e.g., GPRS network) to a less burdensome, second network (e.g., WLAN, USB, Bluetooth, etc.). In such instances, the upload agent 78 of the source may be configured to automatically, or may be manually directed to, upload the content to the intermediary for storing in content storage **84** of the intermediary. To further explain this exemplary embodiment of the present invention, reference is now made to FIG. 6, which illustrates a flowchart including various steps in another method of sharing content of a source. As shown in blocks **104** and **106,** the method can include the intermediary receiving a source reference to content, and indicating the availability of the content, such as in the same manner explained above. Before receiving a first request for the content, however, the source can move from a first network to a second network, as shown in block **108.** Directly or indirectly in response to moving to the second network, the upload agent **78** can upload the content across the second network from content storage **80** of the source to content storage **84** of the intermediary where the content may be stored such as in the same manner explained above with respect to a copy of the content, as shown in block **110.** Similar to before, content manager can store the content in a number of different manners including, for example, such that an intermediate reference to the content identifies the content in content storage of the intermediary.

After the content is stored in content storage **84** of the intermediary **74,** the content manager **82** may receive one or more requests for the content, including a first request and possibly one or more subsequent requests, as shown in blocks **112** and **116.** For the first and any subsequent requests, the requests may identify the content by the intermediary reference. In response to the requests, and recognizing that the intermediary reference identifies content in content storage **84** of the intermediary, the content manager can identify the content in content storage via the intermediary reference, and send the content to the destinations that requested the respective content, as again shown in block **114.** Similar to before, fulfilling requests from local content storage **84** of the intermediary may eliminate those burdens for requests for the content as the intermediary may be capable of sending the content independent of the respective network. Further, uploading the content across a second, less-burdensome network may eliminate the burdens of uploading the content from the source **72** to the destination altogether.

To further illustrate benefits of exemplary embodiments of the present invention, and particularly the benefits of the embodiment shown in FIG. 5, consider for example a mobile blogger operating a terminal source **72** to upload an image acquired by the terminal to a blog maintained by an origin server. In this scenario, the terminal user can acquire an image, "image1.jpg," via an image capture device **65** of the terminal, and store the image in content storage **80** of the terminal source. Upon storing the image, the upload agent **78** of the terminal source can form a source reference, such as "http://phoneaddress.operator.com/image1.jpg," identifying the image in content storage of the source. The upload agent can then send the source reference and a thumbnail of the image to the content manager **82** of an origin server intermediary **74** maintaining a blog of the source user. In such instances, the blog may be formatted in a number of different manners, such as, for example, in a RDF (Resource Description Framework) Site Summary (RSS) feed or file.

Upon receiving the source reference to the image (http://phoneaddress.operator.com/image1.jpg), the content manager **82** of the intermediary **74** can indicate the availability of the image by updating the RSS file to include an intermediary reference to the image. In this regard, the content manager can associate the source reference with an intermediary reference, such as "http://home.isp.com/image1.jpg," identifying the content at the intermediary. After updating the RSS file to include the intermediary reference, a computing system destination **76** can access the updated RSS file including the intermediary reference, and can request the image from the intermediary by identifying the intermediary reference for the image (http://home.isp.com/image1.jpg). In response to the destination request for the content, the content manager can request and receive the content from the source, or more particularly the upload agent **78** of the source, based upon the source reference for the image (http://phoneaddress.operator.com/image1.jpg). After receiving the image from the source, the content manager can store a copy of the image in content storage **84** of the intermediary such that the intermediary reference (http://home.isp.com/image1.jpg) identifies the image therein, and can send the content to the computing system destination that requested the respective image. Then, upon receiving subsequent requests for the image (identifying the image by http://home.isp.com/image1.jpg), the content manager of the intermediary can fulfill those requests from the local content storage **84** without repeatedly requesting/receiving the content from the upload agent **78** of the source **72.**

As explained above, in response to a destination request for content, and recognizing that the intermediary reference for the content is associated with a source reference, or that the content is otherwise not in content storage **84** of the intermediary **74,** the content manager **82** can request and receive the content from the source, or more particularly the upload agent **78** of the source **72.** In various instances, however, the system may not otherwise be configured for the intermediary to directly communicate with the source, such as when the source is in a different domain than the intermediary and separated therefrom by a network address translator (NAT) and/or firewall. In such instances, the source and/or intermediary may be alternatively configured to enable communication therebetween to effectuate exemplary embodiments of the present invention. For example, to enable the content manager to initiate communication with the source, or upload agent of the source, the source may establish and maintain a communication tunnel with the content manager, such as in accordance with a virtual private networking (VPN) technique, HTTP tunnelling technique or the like. The content manager can then communicate with the upload agent across the tunnel to effectuate exemplary embodiments of the present invention.

According to one aspect of the present invention, the functions performed by one or more of the entities of the system, such as the source **72** (e.g., terminal **10**), intermediary (e.g., computing system **22,** origin server **24,** etc.) and/or destination(s) (e.g., terminal, computing system, origin server, etc.) may be performed by various means, such as hardware and/or firmware, including those described above, alone and/or under control of a computer program product (e.g., upload agent **78,** content manager **82**, etc.). The computer program product for performing one or more functions of embodiments of the present invention includes a computer-readable storage medium, such as the non-volatile storage medium, and software including computer-readable program code portions, such as a series of computer instructions, embodied in the computer-readable storage medium.

In this regard, FIGS. 5 and 6 are flowcharts of methods, systems and program products according to the invention. It will be understood that each block or step of the flowcharts, and combinations of blocks in the flowcharts, can be implemented by various means, such as hardware, firmware, and/or software including one or more computer program instructions. As will be appreciated, any such computer program instructions may be loaded onto a computer or other programmable apparatus (i.e., hardware) to produce a machine, such that the instructions which execute on the computer or other programmable apparatus create means for implementing the functions specified in the flowcharts' block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowcharts' block(s) or step(s). The computer program instructions may also be loaded onto a computer or other programmable apparatus to cause a series of operational steps to be performed on the computer or other programmable apparatus to produce a computer-implemented process such that the instructions which execute on the computer or other programmable apparatus provide steps for implementing the functions specified in the flowcharts' block(s) or step(s).

Accordingly, blocks or steps of the flowcharts support combinations of means for performing the specified functions, combinations of steps for performing the specified functions and program instruction means for performing the specified functions. It will also be understood that one or more blocks or steps of the flowcharts, and combinations of blocks or steps in the flowcharts, can be implemented by special purpose hardware-based computer systems which perform the specified functions or steps, or combinations of special purpose hardware and computer instructions.

Many modifications and other embodiments will come to mind to one skilled in the art to which this disclosure pertains having the benefit of the teachings presented in the foregoing descriptions and the associated drawings. Therefore, it is to be understood that the scope of this application is not to be limited to the specific embodiments disclosed and that modifications and other embodiments are intended to be included as long as they are within the scope of the appended claims. Although specific terms are employed herein, they are used in a generic and descriptive sense only and not for purposes of limitation.

## Claims

1. An intermediary apparatus (74) comprising:
means for receiving a source reference identifying content stored by a source (72) of the content, the source reference being received from the source located across a network from the intermediary apparatus;
means for associating the source reference identifying the content stored by the source with an intermediary reference identifying, at the intermediary apparatus, the content, in response to receiving the source reference from the source;
means for indicating (92) the availability of the content via the intermediary reference;
means for receiving at least one request for the content from at least one destination (76), the at least one request including a first request identifying the content by the intermediary reference identifying, at the intermediary apparatus, the content;
means for recognising that the intermediary reference from the first request is associated with the source reference;
means for requesting the content from the source based upon the source reference and in response to the request from the destination, if the first request is received before the content from the source is received;
means for receiving the requested content from the source; and
means for providing the requested content to the respective destination from the intermediary apparatus in response to the at least one request.

2. The intermediary apparatus according to Claim 1, comprising means for receiving the source reference across a first network, and
comprising means for receiving the content across a second network before receiving the first request, the content being received in response to the source moving from the first network to the second network.

3. The intermediary apparatus according to Claim 1, comprising means for storing the content in content storage (84) of the apparatus receiving the content from the source, the content being stored such that the intermediary reference identifies the content in the content storage of the intermediary apparatus.

4. The intermediary apparatus according to Claim 3, comprising means for receiving at least one request further including at least one request subsequent to the first request, and
means for providing the requested content in response to the at least one subsequent request from content storage of the intermediary apparatus independent of the source.

5. The apparatus according to claim 1, wherein the intermediary apparatus is an origin server.

6. A system comprising:
an intermediary apparatus (74) as claimed in any preceding claim, and a source (72), wherein the source comprises:
a) means for sending the source reference identifying the content stored by the apparatus, across the network, to the intermediary apparatus;
b) means for receiving the request for the content based upon the source reference from the apparatus following the first request; and
c) means for sending the content to the apparatus in response to the request for content from the apparatus.

7. The system according to claim 6, wherein the source comprises means for sending the source reference across a cellular wireless first network, and
means for sending the content across a second network before the intermediary apparatus responds to the first request, the content being sent in response to the source moving from the cellular wireless first network to the second network.

8. The system according to Claim 6, wherein the source comprises means for sending the source reference across a first network, and
means for sending the content across a second network before the intermediary apparatus responds to the first request, the content being sent in response to the source moving from the first network to the second network.

9. The system according to Claim 6, wherein the source comprises means for sending the content for storage in a content storage (84) of the intermediary apparatus by the apparatus, wherein the intermediary reference identifies the content in the content storage of the intermediary apparatus.

10. The system according to Claim 6, wherein the source reference is sent to the intermediary apparatus in lieu of the content.

11. A method for sharing content, the method comprising:
receiving (90) a source reference identifying content stored by a source (72) of the content, the source reference being received by an intermediary apparatus (74) from the source located across a network from the intermediary apparatus;
associating the source reference identifying the content stored by the source with an intermediary reference identifying, at the intermediary apparatus, the content, in response to receiving the source reference from the source,
indicating (92) the availability of the content from the intermediary apparatus, the availability being indicated via the intermediary reference;
receiving (94), at the intermediary apparatus, at least one request for the content from at least one destination (76), the at least one request including a first request identifying the content by the intermediary reference identifying, at the intermediary apparatus, the content;
recognising that the intermediary reference from the first request is associated with the source reference;
requesting the content from the source based upon the source reference and in response to the request from the destination, if the first request is received before the content from the source is received;
receiving (96) the requested content from the source in response to the request from the intermediary apparatus; and providing (100) the requested content to the respective destination from the intermediary apparatus in response to the at least one request.

12. The method according to Claim 11, wherein the receiving a source reference comprises receiving a source reference across a first network, and wherein the receiving the content comprises receiving the content across a second network before receiving the first request, the content being received in response to the source moving (108) from the first network to the second network.

13. The method according to Claim 11 further comprising:
storing the content in content storage (84) of the intermediary apparatus after being received from the source, the content being stored such that the intermediary reference identifies the content in a content storage of the intermediary apparatus,

14. The method according to Claim 13, wherein receiving at least one request further includes receiving (102) at least one request subsequent to the first request, and
wherein providing the requested content in response to the at least one subsequent request comprises providing the requested content from the content storage of the intermediary apparatus independent of the source.

15. Computer program instructions that, when executed by at least one processor, cause an apparatus to perform the method as claimed in any one or more of claims 11 to 14.

16. A method for sharing content, the method comprising:
sending, by a source (72), a source reference identifying content stored by the source of the content, across a network, to an intermediary apparatus (74); associating the source reference identifying the content stored by the source with an intermediary reference identifying, at the intermediary apparatus, the content, in response to the intermediary apparatus, receiving the source reference from the source;
indicating (92) the availability of the content from the intermediary apparatus, the availability being indicated via the intermediary reference; receiving (94), at the intermediary apparatus, at least one request for the content from at least one destination (76), the at least one request including a first request identifying the content by the intermediary reference identifying, at the intermediary apparatus, the content;
recognising that the intermediary reference from the first request is associated with the source reference;
requesting the content from the source based upon the source reference and in response to the request from the destination, if the first request is received before the content from the source is received; receiving, at the source, the request for the content based upon the source reference from the intermediary apparatus following the first request; and sending, by the source, the content to the intermediary apparatus in response to the request for the content from the intermediary apparatus.

17. The method according to Claim 16, wherein the sending a source reference comprises sending a source reference across a cellular wireless first network, and
wherein the sending the content comprises sending the content across a second network before the intermediary apparatus responds to the first request, the content being sent in response to the source moving from the first network to the second network.

18. The method according to Claim 16, wherein the sending a source reference comprises sending a source reference across a first network, and
wherein the sending the content comprises sending the content across a second network before the intermediary apparatus responds to the first request, the content being sent in response to the source moving from the first network to the second network.

## Patentansprüche

1. Zwischengeschaltete Vorrichtung (74), umfassend:
Mittel zum Empfangen einer Quellreferenz, die Inhalt, der von einer Quelle (72) des Inhalts gespeichert ist, identifiziert, wobei die Quellreferenz von der Quelle, die sich in einem Netzwerk befindet, empfangen wird, von der zwischengeschalteten Vorrichtung;
Mittel zum Assoziieren der Quellreferenz, die den Inhalt, der von der Quelle gespeichert ist, identifiziert, mit einer zwischengeschalteten Referenz, die den Inhalt an der zwischengeschalteten Vorrichtung identifiziert,
als Reaktion auf das Empfangen der Quellreferenz von der Quelle;
Mittel zum Anzeigen (92) der Verfügbarkeit des Inhalts über die zwischengeschaltete Referenz;
Mittel zum Empfangen von zumindest einer Anforderung von dem Inhalt von zumindest einem Ziel (76), wobei die zumindest eine Anforderung eine erste Anforderung beinhaltet, die den Inhalt von der zwischengeschalteten Referenz, die den Inhalt an der zwischengeschalteten Referenz identifiziert, identifiziert;
Mittel zum Erkennen, dass die zwischengeschaltete Referenz von der ersten Anforderung mit der Quellreferenz assoziiert ist;
Mittel zum Anfordern des Inhalts von der Quelle auf Grundlage der Quellreferenz und als Reaktion auf die Anforderung von dem Ziel, wenn die erste Anforderung empfangen wird bevor der Inhalt von der Quelle empfangen wird;
Mittel zum Empfangen des angeforderten Inhalts von der Quelle; und
Mittel zum Bereitstellen des angeforderten Inhalts an das jeweilige Ziel von der zwischengeschalteten Vorrichtung als Reaktion auf die zumindest eine Anforderung.

2. Zwischengeschaltete Vorrichtung nach Anspruch 1, umfassend Mittel zum Empfangen der Quellreferenz in einem ersten Netzwerk, und
umfassend Mittel zum Empfangen des Inhalts in einem zweiten Netzwerk vor dem Empfangen der ersten Anforderung, wobei der Inhalt als Reaktion darauf, dass sich die Quelle von dem ersten Netzwerk zu dem zweiten Netzwerk bewegt, empfangen wird.

3. Zwischengeschaltete Vorrichtung nach Anspruch 1, umfassend Mittel zum Speichern des Inhalts in einem Inhaltsspeicher (84) der Vorrichtung, die den Inhalt von der Quelle empfängt, wobei der Inhalt derart gespeichert wird, dass die zwischengeschaltete Referenz den Inhalt in dem Inhaltsspeicher der zwischengeschalteten Vorrichtung identifiziert.

4. Zwischengeschaltete Vorrichtung nach Anspruch 3, umfassend Mittel zum Empfangen von zumindest einer Anforderung, die ferner zumindest eine Anforderung, die auf die erste Anforderung folgt, beinhaltet, und
Mittel zum Bereitstellen des angeforderten Inhalts als Reaktion auf die zumindest eine nachfolgende Anforderung von dem Inhaltsspeicher der zwischengeschalteten Vorrichtung unabhängig von der Quelle.

5. Vorrichtung nach Anspruch 1, wobei die zwischengeschaltete Vorrichtung ein Ursprungsserver ist.

6. System, umfassend:
eine zwischengeschaltete Vorrichtung (74) nach einem der vorangehenden Ansprüche und eine Quelle (72), wobei die Quelle Folgendes umfasst:
a) Mittel zum Senden der Quellreferenz, die den Inhalt, der von der Vorrichtung gespeichert ist, identifiziert, in dem Netzwerk an die zwischengeschaltete Vorrichtung;
b) Mittel zum Empfangen der Anforderung von dem Inhalt auf Grundlage der Quellreferenz von der Vorrichtung im Anschluss an die erste Anforderung; und
c) Mittel zum Senden des Inhalts an die Vorrichtung als Reaktion auf die Anforderung von Inhalt von der Vorrichtung.

7. System nach Anspruch 6, wobei die Quelle Mittel zum Senden der Quellreferenz in einem ersten drahtlosen Mobilfunknetzwerk und
Mittel zum Senden des Inhalts in einem zweiten Netzwerk bevor die zwischengeschaltete Vorrichtung auf die erste Anforderung antwortet, umfasst, wobei der Inhalt als Reaktion darauf, dass sich die Quelle von dem ersten drahtlosen Mobilfunknetzwerk zu dem zweiten Netzwerk bewegt, gesendet wird.

8. System nach Anspruch 6, wobei die Quelle Mittel zum Senden der Quellreferenz in einem ersten Netzwerk und
Mittel zum Senden des Inhalts in einem zweiten Netzwerk bevor die zwischengeschaltete Vorrichtung auf die erste Anforderung antwortet umfasst, wobei der Inhalt als Reaktion darauf, dass sich die Quelle von dem ersten Netzwerk zu dem zweiten Netzwerk bewegt, gesendet wird.

9. System nach Anspruch 6, wobei die Quelle Mittel zum Senden des Inhalts zum Speichern in einem Inhaltsspeicher (84) der zwischengeschalteten Vorrichtung durch die Vorrichtung umfasst, wobei die zwischengeschaltete Referenz den Inhalt in dem Inhaltsspeicher der zwischengeschalteten Vorrichtung identifiziert.

10. System nach Anspruch 6, wobei die Quellreferenz anstatt des Inhalts an die zwischengeschaltete Vorrichtung gesendet wird.

11. Verfahren zum Teilen von Inhalt, das Verfahren umfassend:
Empfangen (90) einer Quellreferenz, die Inhalt, der von einer Quelle (72) des Inhalts gespeichert ist, identifiziert, wobei die Quellreferenz von einer zwischengeschalteten Vorrichtung (74) von der Quelle, die sich in einem Netzwerk befindet, empfangen wird, von der zwischengeschalteten Vorrichtung;
Assoziieren der Quellreferenz, die den Inhalt, der von der Quelle gespeichert ist, identifiziert, mit einer zwischengeschalteten Referenz, die den Inhalt an der zwischengeschalteten Vorrichtung identifiziert, als Reaktion auf das Empfangen der Quellreferenz von der Quelle,
Anzeigen (92) der Verfügbarkeit des Inhalts von der zwischengeschalteten Vorrichtung, wobei die Verfügbarkeit über die zwischengeschaltete Referenz angezeigt wird;
Empfangen (94) an der zwischengeschalteten Vorrichtung von zumindest einer Anforderung von dem Inhalt von zumindest einem Ziel (76), wobei die zumindest eine Anforderung eine erste Anforderung beinhaltet, die den Inhalt durch die zwischengeschaltete Referenz, die den Inhalt an der zwischengeschalteten Vorrichtung identifiziert, identifiziert;
Erkennen, dass die zwischengeschaltete Referenz von der ersten Anforderung mit der Quellreferenz assoziiert ist;
Anfordern des Inhalts von der Quelle auf Grundlage der Quellreferenz und als Reaktion auf die Anforderung von dem Ziel, wenn die erste Anforderung empfangen wird bevor der Inhalt von der Quelle empfangen wird;
Empfangen (96) des angeforderten Inhalts von der Quelle als Reaktion auf die Anforderung von der zwischengeschalteten Vorrichtung, und
Bereitstellen (100) des angeforderten Inhalts an das jeweilige Ziel von der zwischengeschalteten Vorrichtung als Reaktion auf die zumindest eine Anforderung.

12. Verfahren nach Anspruch 11. wobei das Empfangen einer Quellreferenz das Empfangen einer Quellreferenz in einem ersten Netzwerk umfasst, und wobei das Empfangen des Inhalts das Empfangen des Inhalts in einem zweiten Netzwerk vor dem Empfangen der ersten Anforderung umfasst, wobei der Inhalt als Reaktion darauf, dass sich die Quelle von dem ersten Netzwerk zu dem zweiten Netzwerk bewegt (108), empfangen wird.

13. Verfahren nach Anspruch 11, ferner umfassend:
Speichern des Inhalts in einem Inhaltsspeicher (84) der zwischengeschalteten Vorrichtung nachdem er von der Quelle empfangen wurde, wobei der Inhalt derart gespeichert wird, dass die zwischengeschaltete Referenz den Inhalt in einem Inhaltsspeicher der zwischengeschalteten Vorrichtung identifiziert.

14. Verfahren nach Anspruch 13, wobei das Empfangen der zumindest einen Anforderung ferner Empfangen (102) von zumindest einer Anforderung im Anschluss an die erste Anforderung beinhaltet, und
wobei das Bereitstellen des angeforderten Inhalts als Reaktion auf die zumindest eine nachfolgende Anforderung das Bereitstellen des angeforderten Inhalts von dem Inhaltsspeicher der zwischengeschalteten Vorrichtung unabhängig von der Quelle umfasst.

15. Computerprogrammanweisungen, die, wenn sie von zumindest einem Prozessor ausgeführt werden, eine Vorrichtung dazu veranlassen, das Verfahren nach einem oder mehreren der Ansprüche 11 bis 14 auszuführen.

16. Verfahren zum Teilen von Inhalt, das Verfahren umfassend:
Senden durch eine Quelle (72) einer Quellreferenz, die Inhalt, der von der Quelle des Inhalts gespeichert ist, identifiziert, in einem Netzwerk an eine zwischengeschaltete Vorrichtung (74);
Assoziieren der Quellreferenz, die den Inhalt, der von der Quelle gespeichert ist, identifiziert, mit einer zwischengeschalteten Referenz, die den Inhalt an der zwischengeschalteten Vorrichtung identifiziert, als Reaktion darauf, dass die zwischengeschaltete Vorrichtung die Quellreferenz von der Quelle empfängt;
Anzeigen (92) der Verfügbarkeit des Inhalts von der zwischengeschalteten Vorrichtung, wobei die Verfügbarkeit über die zwischengeschaltete Referenz angezeigt wird;
Empfangen (94) an der zwischengeschalteten Vorrichtung von zumindest einer Anforderung von dem Inhalt von zumindest einem Ziel (76), wobei die zumindest eine Anforderung eine erste Anforderung beinhaltet, die den Inhalt durch die zwischengeschaltete Referenz, die den Inhalt an der zwischengeschalteten Vorrichtung identifiziert, identifiziert;
Erkennen, dass die zwischengeschaltete Referenz von der ersten Anforderung mit der Quellreferenz assoziiert ist;
Anfordern des Inhalts von der Quelle auf Grundlage der Quellreferenz und als Reaktion auf die Anforderung von dem Ziel, wenn die erste Anforderung empfangen wird bevor der Inhalt von der Quelle empfangen wird;
Empfangen an der Quelle der Anforderung von dem Inhalt auf Grundlage der Quellreferenz von der zwischengeschalteten Vorrichtung im Anschluss an die erste Anforderung; und
Senden durch die Quelle des Inhalts an die zwischengeschaltete Vorrichtung als Reaktion auf die Anforderung von dem Inhalt von der zwischengeschalteten Vorrichtung.

17. Verfahren nach Anspruch 16, wobei das Senden einer Quellreferenz das Senden einer Quellreferenz in einem ersten drahtlosen Mobilfunknetzwerk umfasst, und wobei das Senden des Inhalts das Senden des Inhalts in einem zweiten Netzwerk bevor die zwischengeschaltete Vorrichtung auf die erste Anforderung antwortet umfasst, wobei der Inhalt als Reaktion darauf, dass sich die Quelle von dem ersten Netzwerk zu dem zweiten Netzwerk bewegt, gesendet wird.

18. Verfahren nach Anspruch 16, wobei das Senden einer Quellreferenz das Senden einer Quellreferenz in einem ersten Netzwerk umfasst, und wobei das Senden des Inhalts das Senden des Inhalts in einem zweiten Netzwerk bevor die zwischengeschaltete Vorrichtung auf die erste Anforderung antwortet umfasst, wobei der Inhalt als Reaktion darauf, dass sich die Quelle von dem ersten Netzwerk zu dem zweiten Netzwerk bewegt, gesendet wird.

## Revendications

1. Appareil intermédiaire (74) comprenant :
un moyen de réception d'une référence de source identifiant le contenu mémorisé par une source (72) du contenu, la référence de source étant reçue à partir de la source située à travers un réseau issu de l'appareil intermédiaire ;
un moyen permettant d'associer la référence de source identifiant le contenu mémorisé par la source avec une référence intermédiaire identifiant, au niveau de l'appareil intermédiaire, le contenu, en réponse à la réception de la référence de source issue de la source ;
un moyen d'indication (92) de la disponibilité du contenu par l'intermédiaire de la référence intermédiaire ;
un moyen de réception d'au moins une demande pour le contenu à partir d'au moins une destination (76), la ou les demandes comprenant une première demande identifiant le contenu par l'identification, par la référence intermédiaire, au niveau de l'appareil intermédiaire, du contenu ;
un moyen de reconnaissance du fait que la référence intermédiaire issue de la première demande est associée à la référence de source ;
un moyen de demande du contenu à partir de la source fondé sur la référence de source et en réponse à la demande issue de la destination, si la première demande est reçue avant la réception du contenu issu de la source ;
un moyen de réception du contenu demandé à partir de la source ; et
un moyen de livraison du contenu demandé à la destination respective à partir de l'appareil intermédiaire en réponse à la ou les demandes.

2. Appareil intermédiaire selon la revendication 1, comprenant un moyen permettant de recevoir la référence de source à travers un premier réseau, et comprenant un moyen de réception du contenu à travers un second réseau recevant la première demande, le contenu étant reçu en réponse au déplacement de la source du premier réseau au second réseau.

3. Appareil intermédiaire selon la revendication 1, comprenant un moyen permettant de mémoriser le contenu dans une mémoire de contenu (84) de l'appareil recevant le contenu à partir de la source, le contenu étant mémorisé de sorte que la référence intermédiaire identifie le contenu dans la mémoire de contenu de l'appareil intermédiaire.

4. Appareil intermédiaire selon la revendication 3, comprenant un moyen permettant de recevoir au moins une demande comprenant en outre au moins une demande à la suite de la première demande, et
un moyen permettant la livraison du contenu demandé en réponse à la ou les demandes ultérieures provenant de la mémoire de contenu de l'appareil intermédiaire indépendant de la source.

5. Appareil selon la revendication 1, l'appareil intermédiaire étant un serveur d'origine.

6. Système comprenant :
un appareil intermédiaire (74) selon l'une quelconque des revendications précédentes, et une source (72), la source comprenant :
a) un moyen permettant d'envoyer la référence de source identifiant le contenu mémorisé par l'appareil à travers le réseau, jusqu'à l'appareil intermédiaire ;
b) un moyen permettant de recevoir la demande de contenu en fonction de la référence de source issue de l'appareil à la suite de la première demande ; et
c) un moyen permettant d'envoyer le contenu à l'appareil en réponse à la demande de contenu provenant de l'appareil.

7. Système selon la revendication 6, dans lequel la source comprend un moyen permettant d'envoyer la référence de source à travers un premier réseau cellulaire sans fil, et
un moyen permettant d'envoyer le contenu à travers un second réseau avant que l'appareil intermédiaire ne réponde à la première demande, le contenu étant envoyé en réponse au déplacement de la source du premier réseau cellulaire sans fil au second réseau.

8. Système selon la revendication 6, dans lequel la source comprend un moyen permettant d'envoyer la référence de source à travers un premier réseau, et
un moyen permettant d'envoyer le contenu à travers un second réseau avant que l'appareil intermédiaire ne réponde à la première demande, le contenu étant envoyé en réponse au déplacement de la source du premier réseau au second réseau.

9. Système selon la revendication 6, dans lequel la source comprend un moyen permettant d'envoyer le contenu pour mémorisation dans une mémorisation de contenu (84) de l'appareil intermédiaire par l'appareil, la référence intermédiaire identifiant le contenu dans la mémorisation de contenu de l'appareil intermédiaire.

10. Système selon la revendication 6, dans lequel la référence de source est envoyée à l'appareil intermédiaire à la place du contenu.

11. Procédé de partage de contenu, le procédé comprenant :
la réception (90) d'une référence de source identifiant du contenu mémorisé par une source (72) du contenu, la référence de source étant reçue par un appareil intermédiaire (74) issu de la source située à travers un réseau issu de l'appareil intermédiaire ;
l'association de la référence de source identifiant le contenu enregistré par la source avec une référence intermédiaire identifiant, au niveau de l'appareil intermédiaire, le contenu, en réponse à la réception de la référence de source à partir de la source,
l'indication (92) de la disponibilité du contenu à partir de l'appareil intermédiaire, la disponibilité étant indiquée par l'intermédiaire de la référence intermédiaire ;
la réception (94), au niveau de l'appareil intermédiaire, d'au moins une demande de contenu issue d'au moins une destination (76), la ou les demandes comprenant une première demande identifiant le contenu par la référence intermédiaire identifiant, au niveau de l'appareil intermédiaire, le contenu ;
la reconnaissance comme quoi la référence intermédiaire issue de la première demande est associée à la référence de source ;
la demande du contenu issu de la source en fonction de la référence de source et en réponse à la demande issue de la destination, si la première demande est reçue avant la réception du contenu de la source ;
la réception (96) du contenu demandé issu de la source en réponse à la demande de l'appareil intermédiaire ; et
la livraison (100) du contenu demandé à la destination respective à partir de l'appareil intermédiaire en réponse à la ou les demandes.

12. Procédé selon la revendication 11, dans lequel la réception d'une référence de source comprend la réception d'une référence de source à travers un premier réseau, et dans lequel la réception du contenu comprend la réception du contenu à travers un second réseau avant la réception de la première demande, le contenu étant reçu en réponse au déplacement de la source (108) du premier réseau au second réseau.

13. Procédé selon la revendication 11, comprenant en outre :
la mémorisation du contenu dans la mémoire de contenu (84) de l'appareil intermédiaire après réception de la source, le contenu étant mémorisé de sorte que la référence de source identifie le contenu dans une mémoire de contenu de l'appareil intermédiaire.

14. Procédé selon la revendication 13, dans lequel la réception d'au moins une demande comprend en outre la réception (102) d'au moins une demande à la suite de la première demande, et
dans lequel la livraison du contenu demandé en réponse à la ou les demandes ultérieures comprend la livraison du contenu demandé à partir de la mémoire de contenu de l'appareil intermédiaire indépendamment de la source.

15. Instructions de programme informatique qui quand elles sont exécutées par au moins un processeur, amènent un appareil à exécuter le procédé tel que revendiqué dans l'une quelconque des revendications 11 à 14.

16. Procédé de partage de contenu, le procédé comprenant :
l'envoi, par une source (72), d'une référence de source identifiant le contenu mémorisé par la source du contenu à travers un réseau, jusqu'à un appareil intermédiaire (74) ;
l'association de la référence de source identifiant le contenu mémorisé par la source à une référence intermédiaire identifiant, au niveau de l'appareil intermédiaire, le contenu en réponse à l'appareil intermédiaire, la réception de la référence source depuis la source ;
l'indication (92) de la disponibilité du contenu à partir de l'appareil intermédiaire, la disponibilité étant indiquée par l'intermédiaire de la référence intermédiaire ;
la réception (94), au niveau de l'appareil intermédiaire, d'au moins une demande pour le contenu d'au moins une destination (76), la ou les demandes comprenant une première demande identifiant le contenu par la référence intermédiaire identifiant, au niveau de l'appareil intermédiaire, le contenu ;
la reconnaissance du fait que la référence intermédiaire issue de la première demande est associée à la référence de source ;
la demande du contenu à partir de la source en fonction de la référence de source et en réponse à la demande issue de la destination, si la première demande est reçue avant que le contenu provenant de la source ne soit reçu ;
la réception, au niveau de la source, de la demande pour le contenu en fonction de la référence de source issue de l'appareil intermédiaire à la suite de la première demande ; et
l'envoi, par la source, du contenu à l'appareil intermédiaire en réponse à la demande du contenu issu de l'appareil intermédiaire.

17. Procédé selon la revendication 16,
dans lequel l'envoi d'une référence de source comprend l'envoi d'une référence de source à travers un premier réseau cellulaire sans fil, et
dans lequel l'envoi du contenu comprend l'envoi du contenu à travers un second réseau avant que l'appareil intermédiaire ne réponde à la première demande, le contenu étant envoyé en réponse au déplacement de la source du premier réseau au second réseau.

18. Procédé selon la revendication 16, dans lequel l'envoi d'une référence de source comprend l'envoi d'une référence de source à travers un premier réseau, et
dans lequel l'envoi du contenu comprend l'envoi du contenu à travers un second réseau avant que l'appareil intermédiaire ne réponde à la première demande, le contenu étant envoyé en réponse au déplacement de la source du premier réseau au second réseau.
